Europäisches Patentamt

European Patent Office

Office européen des brevets

(19)

(11) Veröffentlichungsnummer : **0 096 256**
**B1**

(12) **EUROPÄISCHE PATENTSCHRIFT**

(45) Veröffentlichungstag der Patentschrift :
04.03.87

(51) Int. Cl.⁴ : **A 21 B 5/02**

(21) Anmeldenummer : 83104930.9

(22) Anmeldetag : 19.05.83

(54) **Vorrichtung zur Herstellung von Backwaren aus dünnflüssiger Teigmasse.**

(30) Priorität : 09.06.82 DE 3221723

(43) Veröffentlichungstag der Anmeldung :
21.12.83 Patentblatt 83/51

(45) Bekanntmachung des Hinweises auf die Patenterteilung : 04.03.87 Patentblatt 87/10

(84) Benannte Vertragsstaaten :
AT BE DE FR IT NL

(56) Entgegenhaltungen :
EP-A- 0 012 588
DE-A- 2 932 156
DE-A- 3 020 962

(73) Patentinhaber : **Rinderle, Karl**
**Viktor-von-Scheffelstrasse 254**
**D-8551 Gössweinstein (DE)**

(72) Erfinder : **Rinderle, Karl**
**Viktor-von-Scheffelstrasse 254**
**D-8551 Gössweinstein (DE)**

(74) Vertreter : **Wilhelm, Hans-Herbert, Dr.-Ing. et al**
**Wilhelm & Dauster Patentanwälte Hospitalstrasse 8**
**D-7000 Stuttgart 1 (DE)**

## Beschreibung

Die Erfindung betrifft eine Vorrichtung zur Herstellung von Backwaren aus dünnflüssiger Teigmasse, insbesondere von Formwaffeln, bei der die Teigmasse zwischen zwei gegeneinander drückbare Formhälften eingefüllt, geformt und in einer Backstation ausgebacken wird, wobei insbesondere zwischen den Formhälften eine band- oder plattenförmige Einlage mit den ausgestanzten Konturen der Backwaren vorgesehen ist, wobei und die Teigmasse jeweils durch die ausgestanzten Öffnungen eingefüllt und nach dem Ausbacken mit der Einlage zu nachfolgenden Bearbeitungsstationen weitertransportiert wird.

Vorrichtungen dieser Art sind bekannt (DE-A-29 32 156 und DE-A-30 20 962). Bei diesen bekannten Bauarten wird zum Zweck der Beheizung der in der Art von Waffelbackzangen ausgebildeten Formhälften, wie auch bei allen anderen Backverfahren und Backeinrichtungen für Waffeln üblicher Art die Anordnung von Brennern vorgesehen, wobei für stationäre Zangen Dampf- oder Gasbrenner und für geschleppte, d. h. geförderte Backformen, wie sie in den vorher erwähnten Druckschriften gezeigt sind, im allgemeinen Gasbrenner verwendet werden. Für Sonderformen von Waffeln kann auch das Ausbacken mit Hilfe von heißem Öl vorgesehen werden (DE-A-22 50 700).

Die bekannten Backeinrichtungen der eingangs genannten Art sind befriedigend zur Herstellung der meisten Waffelsorten. Wenn die Waffeln jedoch einen größeren Zuckeranteil, insbesondere einen Zuckeranteil über 25 % aufweisen müssen, wie es beispielsweise für Waffeln erforderlich ist, die später mit Eis gefüllt werden sollen, dann lassen sich die bekannten Backverfahren der eingangs genannten Art nicht einsetzen, da die zwar ausgebackene, flüssige Teigmasse nach dem Ausbacken zu wenig widerstandsfähig ist, um eine bei den eingangs erwähnten Verfahren und Einrichtungen vorgesehene Weitertransportierung und vor allen Dingen eine Weiterverarbeitung zu erlauben.

Es wurde erkannt, daß hierbei der Backvorgang selbst nicht ausschlaggebend ist, sondern das zum Ausformen notwendige Abkühlen der Formen und des Backgutes. Bei Einrichtungen der eingangs genannten Art mit geschleppten Formen wäre eine nicht realisierbare Länge für die Abkühlzone notwendig, wenn die zum Ausformen und zur Weiterverarbeitung der Formwaffeln notwendige Temperaturabsenkung erreicht werden soll. Das Abkühlen von Backgut in besonderen Kühlformen ist in der EP-A-0 012 588 geoffenbart.

Der vorliegenden Erfindung liegt daher die Aufgabe zugrunde, eine Vorrichtung der eingangs genannten Art so auszugestalten, daß flüssige Teigmassen, ohne Rücksicht auf ihren Zuckeranteil vollständig ausgebacken und durch Kühlung soweit verfestigt sind, daß sie sich mit den eingangs erwähnten Verfahren und Vorrichtungen weiterverarbeiten lassen, so daß auch für Waffeln mit hohem Zuckeranteil oder für Oblaten mit hohem Zuckeranteil das vorteilhafte Verfahren des Weitertransportes der schon ausgebackenen Formwaffeln zum Zweck der Weiterverarbeitung oder zum Zweck des Zusammenfügens von zwei hohlen Formhälften zu Waffelhohlkörpern mit Füllung o. dgl. erreicht werden kann.

Die Erfindung besteht darin, daß jede Formhälfte mit mindestens einem über Ventile von außen zugänglichen Hohlraum versehen und daß hinter der Backstation eine Kühlstation vorgesehen ist, die aus einem eine Kühlflüssigkeit enthaltenden Behälter und aus einer Zuführeinrichtung für die Kühlflüssigkeit zu den Hohlräumen in den Formhälften besteht, die jeweils mit den Ventilen zusammenwirkt. Dieses neue Verfahren und die neue Vorrichtung erlauben es, die Temperatur der Backplatten bzw. der -formen sehr schnell abzusenken, so daß der im Backgut befindliche Zucker von der Backtemperatur bedingten flüssigen Phase in einer der Temperaturabsenkung entsprechenden festen Form aushärtet, so daß die dadurch erreichte Stabilität der Backwaren ein problemloses Ausheben aus den Formhälften, beispielsweise mit Hilfe der zwischen den Formhälften bei den eingangs erwähnten Einrichtungen vorgesehenen Einlage möglich ist. Mit der neuen Einrichtung können daher auch Waffeln gebacken und kontinuierlich weiterverarbeitet werden, wie sie beispielsweise zum Füllen mit Eis notwendig sind, wodurch die Flüssigkeit abgebende Füllung Waffeln mit einem niedrigen Zuckeranteil nach kurzer Zeit erweichen würde.

Die neue Vorrichtung erlaubt es auch in vorteilhafter Weise, den Backvorgang selbst auf die gleiche Weise durchzuführen, wie der Kühlvorgang bewirkt wird. Der Kühlstation kann zu diesem Zweck in besonders vorteilhafter Weise eine Backstation vorgeschaltet sein, die — wie die Kühlstation — mit einer mit den Ventilen der Hohlräume zusammenwirkenden Zuführeinrichtung, aber mit einem Behälter ausgerüstet ist, in dem eine auf Backtemperatur gebrachte Heizflüssigkeit enthalten ist. Mit der neuen Vorrichtung wird es daher auch möglich, einen sehr intensiven und schnellen Backvorgang zu bewirken, der unabhängig ist von der Einstellung von Brennern. Die neue Vorrichtung erlaubt auch ein sehr gleichmäßiges Ausbacken, weil gewährleistet werden kann, daß die Backformen eine gleichmäßige Temperatur aufweisen.

Es ist besonders einfach, die neue Vorrichtung zu realisieren, wenn die Ventile als selbstschließende Ventile ausgebildet sind, die erst durch Kupplungsmittel der Zuführeinrichtung betätigbar und damit zu öffnen sind. Die Hohlräume der Formen bleiben somit, sobald sie mit Heiz- oder Kühlflüssigkeit gefüllt sind, bis ausgelöst von der Zuführeinrichtung entweder ein Wechsel der Flüssigkeit oder ein Entleeren ausgelöst wird. Zu diesem Zweck kann jedem Hohlraum mindestens je ein zur Zuführung und ein zur Abfuhr der Kühl- oder Heizflüssigkeit dienendes Ventil so zugeordnet sein, daß der Hohlraum möglichst schnell füll- bzw. entleerbar ist. Eine einfache Realisierung der gesamten Backeinrichtung läßt sich dadurch erreichen, daß die jeweils zu einer Form zusammenklappbar ausgebildeten Formhälften an einer Transporteinrichtung, insbesondere an einem endlosen Förderband angeordnet sind und von diesem jeweils nacheinander den Zuführeinrichtungen zugeführt werden und daß die Zuführeinrichtungen in der Förderrichtung mindestens über einen Teilabschnitt des Förderweges der Formen synchron zu diesen bewegbar angeordnet und mit einer Vorschubeinrichtung ausgerüstet sind, mit der die Kupplungsmittel quer zur Förderrichtung hin- und herbewegbar sind. Die Zuführeinrichtungen lassen sich auf diese Weise in sehr einfacher Weise schnell mit den Hohlräumen der Backformen kuppeln, laufen solange mit diesen mit, wenn jene beispielsweise auf einem endlosen Band angeordnet sind, wie der Austauschvorgang für die Flüssigkeit in Anspruch nimmt, und werden dann wieder von den Ventilen gelöst, die sich selbsttätig schließen. Natürlich ist es auch möglich, anstelle einer solchen kontinuierlich umlaufenden Transporteinrichtung für die Backformen eine schrittweise wirkende Fördereinrichtung vorzusehen, mit der es möglich ist, den Füll- und Entleervorgang der Hohlräume in den Backformen jeweils im Stillstand an der Transporteinrichtung vorzunehmen, so daß die Zuführeinrichtungen selbst nicht in Förderrichtung bewegbar sein müssen. Für den gesamten zeitlichen Ablauf des Back- und Kühlvorganges ist es allerdings vorteilhafter, wenn eine kontinuierliche Fortbewegung der Backformen und bedingt dadurch zumindestens ein abschnittweises Mitlaufen der Zuführeinrichtungen gewählt wird.

Die Zuführeinrichtungen können für diese Ausführung jeweils auf einem Kreuzschlitten angeordnet sein, der sowohl in der Förderrichtung der Formen als auch senkrecht dazu verfahrbar ist. Die Vorschubeinrichtung kann aus pneumatisch oder hydraulisch wirkenden steuerbaren Zylindern bestehen, und der Kreuzschlitten kann form- und kraftschlüssig mit den Formen kuppelbar sein, so daß er von der Transporteinrichtung der Formen in der Förderrichtung mitgenommen wird, solange die Ventile zum Flüssigkeitsaustausch mit der Zuführeinrichtung gekoppelt sind und betätigt werden. Bei dieser Ausführung kann dem Kreuzschlitten in einfacher Weise eine Rückholeinrichtung, insbesondere eine Rückholfeder zugeordnet sein, die ihn nach dem Abkuppeln der Ventile wieder in die Ausgangsstellung zurückholt, ehe er mit den nächstfolgenden Backformen wieder mitläuft.

Um eine gleichmäßige Heiz- bzw. Kühlwirkung in den Backformen zu erreichen, können die Hohlräume der Formhälften jeweils in parallel zueinander angeordnete Kammern unterteilt sein, die untereinander durch Öffnungen in Verbindung stehen und von denen die erste mit dem Zuführventil und die letzte mit dem Auslaßventil versehen ist. Diese Ausgestaltung gewährleistet eine gleichmäßige Erwärmung oder Kühlung über den gesamten Querschnitt der Form, so daß ein unregelmäßiges Abkühlen des Backgutes über verschiedene Bereiche vermieden wird, was eintreten könnte, wenn die Zu- und Abströmung des Heiz- bzw. Kühlmittels nicht gleichmäßig über den Querschnitt der Backformen verteilt vor sich gehen würde. Die Öffnungen können dabei als eine in der Längsrichtung der Kammern in der Trennwand zu der benachbarten Kammer verlaufende Reihe von Bohrungen ausgebildet sein, die jeweils untereinander den gleichen Abstand aufweisen, so daß die erwünschte gleichmäßige Durchströmung gewährleistet ist.

Weitere Merkmale und Vorteile der Erfindung gehen aus der nachfolgenden Beschreibung von Ausführungsbeispielen hervor, die in der Zeichnung dargestellt sind. Es zeigt

Figur 1 die schematische Schnittdarstellung einer in der Art einer Backzange ausgebildeten, aus zwei Formhälften bestehenden Backform für die Herstellung von Hohlwaffeln, die beispielsweise anschließend mit Schaumcreme oder insbesondere mit Eis gefüllt werden können, einschließlich einer Füllstation für Kühl- oder Heizflüssigkeit,

Figur 2 die Draufsicht auf die Backform der Fig. 1, teilweise geschnitten,

Figur 3 die schematische Draufsicht auf eine aus mehreren Backformen ähnlich den Fig. 1 und 2 bestehenden Einrichtung zur Herstellung von gefüllten hohlen Backwaren mit einer Back- und einer Kühlstation und einer nachfolgenden Füllstation für die Hohlwaffeln.

Figur 4 die Seitenansicht einer anderen Einrichtung zur Herstellung von gefüllten Hohlwaffeln und

Figur 5 die Draufsicht auf die Einrichtung der Fig. 4.

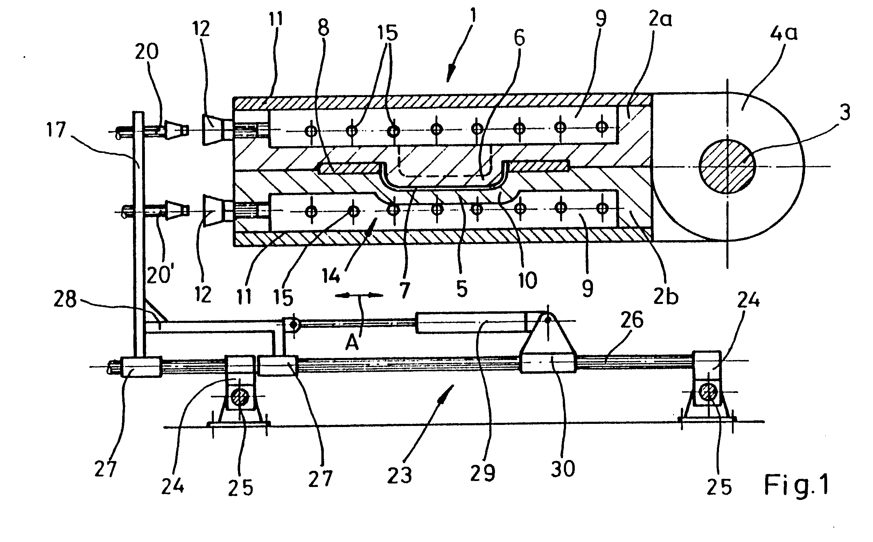

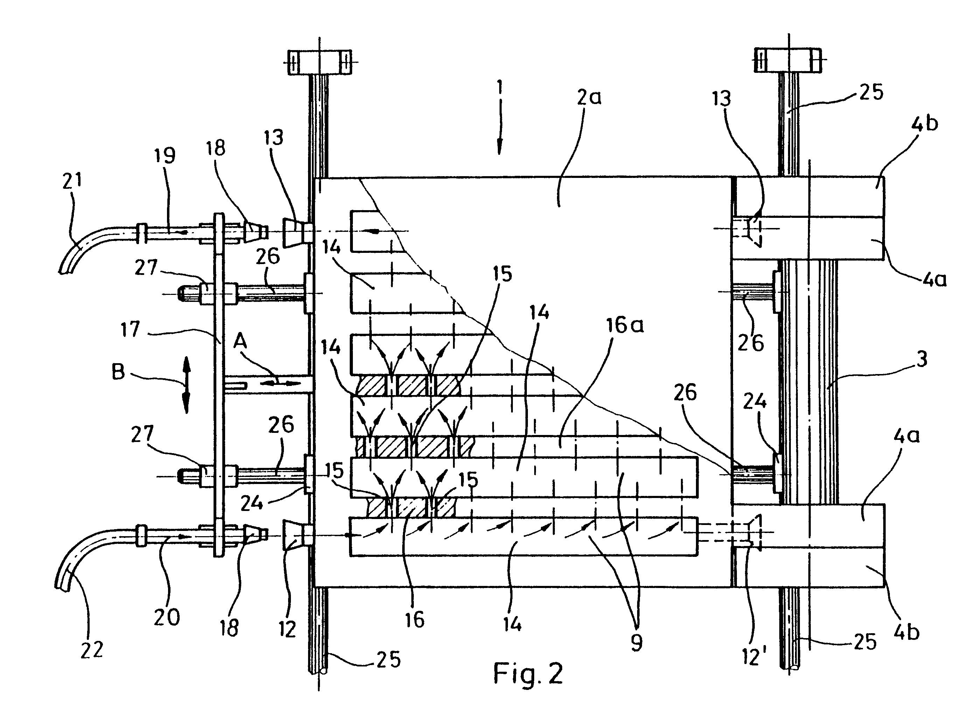

In den Fig. 1 und 2 ist eine in der Art einer Backzange aufgebaute Backform 1 zur Herstellung einer Formwaffel aus dünnflüssiger Teigmasse gezeigt, die aus zwei Formhälften 2a, 2b besteht, welche untereinander um ein Scharnier klappbar zusammengehalten sind, das aus der Klappachse 3 und den darauf jeweils schwenkbar befestigten Scharnierösen 4a, 4b der beiden Formhälften besteht. In den beiden Formhälften 2a, 2b sind korrespondierend in an sich bekannter Weise Vertiefungen 5 bzw. der Innenkontur der zwischen den Formhälften 2a, 2b auszubackenden Formwaffel 7 entsprechen, die im gezeigten Ausführungsbeispiel die Hälfte einer Hohlform darstellt. In ebenfalls bekannter Weise ist zwischen die beiden Formhälften 2a und 2b eine Einlageplatte 8 eingebracht, die in ihrer Mitte eine ausgestanzte Öffnung mit der Außenkontur der auszubackenden Waffel 7 besitzt und die Waffel 7 nach dem Ausbacken am Rand festhält, wenn die Formhälften 2a, 2b jeweils nach oben und unter weggeklappt werden. Die Waffel 7 kann auf diese Weise mit der Einlage 8, die beispielsweise Teil eines durch mehrere Formen hindurchgehenden Bandes sein kann, zu weiteren Behandlungsstationen gefördert werden, wie das ebenfalls bekannt ist.

Erfindungsgemäß sind beide Formhälften 2a und 2b mit Hohlräumen 9 versehen, die möglichst so ausgebildet sind, daß sie durch Wandungen 10 von der Außenkontur der Ausnehmung 5 bzw. der Vorsprunges 6 getrennt sind, die eine gleichmäßige Stärke aufweisen. Damit soll, was später noch erläutert werden wird, ein möglichst gleichmäßiger Wärmeübergang von den Hohlräumen 9 zu dem Bereich erreicht werden, in dem sich die auszubackende Waffel 7 befindet. Beim Ausführungsbeispiel sind die Hohlräume 9 aus dem Material der Formhälften 2a und 2b herausgenommen und nach außen durch je eine Deckplatte 11 verschlossen. Jeder Hohlraum 9 in jeder der beiden Formhälften 2a und 2b ist durch Ventile 12, 13 von außen zugängig, die in an sich bekannter Weise als selbstschließende Ventile ausgebildet sind, wie sie auch bei Bereifungen von Kraftfahrzeugen o. dgl. bekannt sind. Diese Ventile lassen sich öffnen, wenn von außen geeignete Betätigungsmittel auf das Ventil zugeführt werden.

Wie aus Fig. 2 hervorgeht, besitzt jeder Hohlraum 9 zwei Ventile, und zwar ein Ventil 12 zur Zufuhr eines Fluids und ein zweites Ventil 13, über das die im Hohlraum 9 befindliche Flüssigkeit wieder abgeführt werden kann. Aus Fig. 2 geht ferner hervor, daß jeder der Hohlräume 9 aus mehreren parallel zueinander angeordneten Kammern 14 mit einem im wesentlichen quaderförmigen Querschnitt besteht, die untereinander jeweils durch Bohrungen 15 in Verbindung stehen, die jeweils in einer Reihe in der Zwischenwand 16 von einer Kammer 14 zur anderen im gleichen Abstand zueinander angeordnet sind. Die Ausgestaltung ist dabei so getroffen, daß die Bohrungen 15 in der Trennwand 16 von der vom Einlaßventil 12 aus gesehen ersten Kammer 14 zu den Bohrungen 15 in der Trennwand 16a zwischen der zweiten und der dritten Kammer jeweils um die Hälfte der Teilung der Lochabstände versetzt zueinander sind. Es wird damit erreicht, daß die durch das Ventil 12 beispielsweise unter Druck zugeführte Flüssigkeit sich möglichst gleichmäßig über die gesamte Fläche jeder Formhälfte verteilt.

Diese Ausgestaltung der Backform 1 erlaubt es, die in den Backformen 1 befindlichen Waffeln 7 durch unmittelbare Beeinflussung beispielsweise kühlen zu können, dadurch daß durch das Ventil 12 eine unter Druck stehende Kühlflüssigkeit in die Holräume 9 gedrückt wird. Der bei bekannten Backeinrichtungen und Backverfahren notwendige Aufwand für die Kühlung der von Brennern erhitzten Backformen kann daher entfallen. Es wird eine wesentlich wirksamere Kühlung erreicht, so daß für den Kühlvorgang auch keine großen Abkühlzeiten notwendig sind, die beispielsweise bei einer kontinuierlichen Förderung der Formen 1 durch einen Backofen einen entsprechend langen und aufwendigen, dem Backofen nachgeschalteten Kühltunnel erforderlich gemacht hätten. Durch die neue Ausbildung wird eine sehr schnelle Abkühlung der Waffeln 7 möglich, die es erlaubt, die Formhälften 2a und 2b schon nach verhältnismäßig kurzer Kühlzeit zu öffnen, ohne daß die Gefahr besteht, daß die Waffel 7 nicht in der Einlage 8 gehalten wird, weil ihre Form noch zu unbeständig ist. Die neuen Backformen erlauben es daher auch, Waffeln mit einem hohen Zuckeranteil wirtschaftlich auszubacken und nach dem Backvorgang in bekannter Weise zu nachfolgenden Weiterverarbeitungsstationen zu führen, ohne daß die Waffeln zu diesem Zweck aus der Einlage 8 entfernt werden müßten.

Selbstverständlich ist es auch möglich, anstelle einer Kühlung der Backformen 1 die Beheizung durch eine entsprechende Heizflüssigkeit vorzunehmen. Es genügt zu diesem Zweck, anstelle einer Kühlflüssigkeit eine Heizflüssigkeit durch das Ventil 12 zuzuführen. Die aus den Hohlräumen 9 verdrängte Flüssigkeit entweicht durch das Ventil 13. Die neuen Backformen machen daher auch den Einsatz bisher üblicher Backöfen mit Brennereinrichtungen zum Aufheizen der Backformen überflüssig. Die Backeinrichtung wird im wesentlichen ersetzt durch die aus den Fig. 1 und 2 ersichtliche Zuführeinrichtung 17 für eine Heizflüssigkeit zu den Hohlräumen 9. Die Zuführeinrichtung 17 muß zu diesem Zweck mit einem Behälter in Verbindung stehen, der die einzuspritzende Flüssigkeit enthält und über eine Druckquelle an die Zuführeinrichtung 17 abgibt.

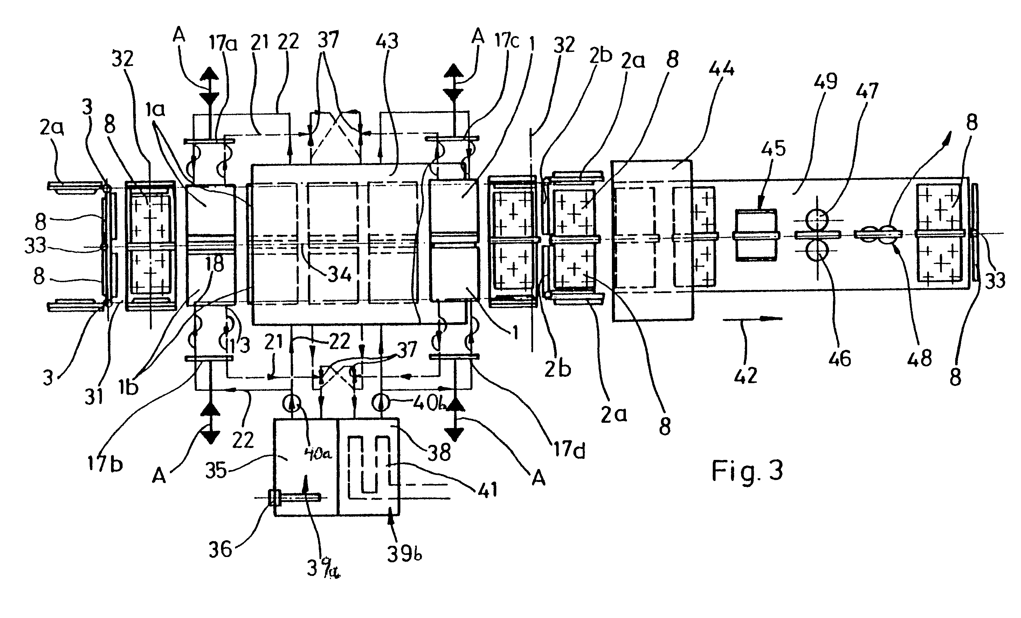

Die Zuführeinrichtung 17, die im wesentlichen aus den leicht konisch ausgebildeten Kupplungsanschlüssen 18 und den damit verbundenen Anschlußstutzen 19 bzw. 20 für je eine Zuführleitung 21 und 22 bestehen, sind bei dem Ausführungsbeispiel der Fig. 1 und 2 jeweils auf einem Kreuzschlitten 23 gelagert, der aus den beiden Führungshülsen 24 für die Führung auf den Führungsstangen 25 sowie aus den fest mit den Hülsen 24 verbundenen Stangen 26 besteht, auf denen wiederum zwei Führungshülsen 27 verschiebbar angeordnet sind, auf denen über das Gestell 28 die Zuführeinrichtung 17 befestigt ist. Das Gestell 28 mit den Hülsen 27 ist mit einem pneumatischen oder hydraulischen Antriebszylinder 29 in Wirkverbindung, der seinerseits schwenkbar, aber in Längsrichtung der Stange 26 unverschiebbar auf der Führungsstange 26 befestigt ist. Das geschieht mit Hilfe einer Klemme 30, die fest auf der Stange 26 sitzt und oben mit einem Schwenklager für den Zylinder 29 versehen ist. Aus der folgenden Beschreibung einer Einrichtung zum Ausbacken von Hohlwaffeln, die mit mehreren Formen 1 bestückt und in der Fig. 3 dargestellt ist, wird deutlich werden, warum die Zuführeinrichtung 17 auf einem Kreuzschlitten 23 angeordnet ist und nicht nur in der Richtung A in den Fig. 1 und 2, sondern auch in der Richtung B in Fig. 2 hin- und herbewegbar ausgebildet ist.

In der Fig. 3 sind mehrere der Backformen 1 gemäß den Fig. 1 und 2 hintereinander, beispielsweise auf einem Kettenförderer, angeordnet, der aus einer endlosen Kette 31 besteht, die strichpunktiert angedeutet ist und jeweils um nicht gezeigte Umlenkwalzen geführt ist, deren Achsen mit 32 bezeichnet sind. Dem Kettenförderer 31 ist ein geeigneter Auflagetisch zugeordnet, über den die Backformen 1 in der Fig. 3 von links nach rechts gezogen werden, bis sie im Bereich der rechten Umlenkrolle wieder nach unten weggeführt werden. Die Backformen 1 erreichen dabei das linke Ende des Führungstisches im geöffneten Zustand, in dem die obere Formhälfte 2a etwa senkrecht zu der unteren Formhälfte steht, welche auf dem Tisch aufliegend geführt ist. Bei den ersten beiden geöffneten Formen 1 ist daher die in der Form 1 befindliche Einlage 8 zu sehen, die in nicht näher dargestellter Weise jeweils mit fünf ausgestanzten Konturen der auszubackenden Waffeln versehen ist. Jede Formhälfte 2a bzw. 2b weist daher ebenfalls fünf Formen auf. Wie aus Fig. 3 ferner ersichtlich, aber an sich bekannt ist, sind dem Kettenförderer 31 jeweils quer zur Laufrichtung gegenüberliegende Formenpaare einander zugeordnet, deren Klappscharniere bzw. Scharnierachsen 3 jeweils außen liegen, so daß sich die Formenpaare jeweils nach außen öffnen lassen. Auch die Einlagen 8 bestehen beim Ausführungsbeispiel jeweils aus einem Paar von Einlagen 8, die in der Mitte des Kettenförderers 1 über ein Scharnier 33 ebenfalls klappbar miteinander verbunden sind. Die einander zugeordneten Formen 1a bzw. 1b, die sich bezüglich der Mittellinie 34 des Förderers 31 gegenüberliegen, besitzen jeweils spiegelsymmetrisch zueinander ausgebildete Formen für die Waffeln, so daß in der einen Form 1a jeweils eine Hälfte und in der Form 1b die dazugehörige andere Hälfte einer Hohlform ausgebacken werden können, die anschließend — wie noch erläutert werden wird — untereinander zusammengesteckt werden können, nachdem sie gefüllt worden sind, ohne daß sie die dargestellte Vorrichtung verlassen müssen. Dieser Vorgang ist allerdings nicht Gegenstand des Schutzbegehrens.

Die aufgeklappten Formen 1a und 1b werden auf der linken Seite der Fig. 3 jeweils mit der notwendigen flüssigen Teigmasse gefüllt, so daß jeweils alle zehn Hohlformen der auszubackenden Hohlwaffeln mit Teig gefüllt sind. Es werden dann jeweils die oberen Formhälften 2a nach innen geklappt, so daß die Teigmasse die gewünschte Form einnimmt. Die Zuführeinrichtungen 17a, 17b, die jeweils beiden der gegenüberliegenden Formen 1a bzw. 1b zugeordnet sind, treten dann in Aktion und werden jeweils in der anhand der Fig. 1 und 2 geschilderten Weise mit ihren Kreuzschlitten in Richtung A auf die Formen 1a bzw. 1b zu verschoben, so daß die Ventile an den Hohlräumen der Formen 1a und 1b geöffnet werden. Es muß in diesem Zusammenhang darauf hingewiesen werden, daß die Ventile 12 und 13 der einzelnen Backformen nicht in der gleichen Weise wie in den Fig. 1 und 2 gezeigt auf der aufklappbaren Seite der Formen angeordnet sein können, weil diese Seite zu der Mitte des Förderers 31 zu liegt. Wie in Fig. 2 angedeutet, werden die Ventile 12' bzw. 13' vielmehr nach der anderen Seite, nämlich nach der Außenseite zu verlegt, wobei aus Platzgründen die Lagerwangen 4a, 4b der beiden Formhälften 2a, 2b mehr zur Mitte der Form 1 hin verlagert werden müssen. Im übrigen bleibt die Ausgestaltung gleich, insbesondere hinsichtlich der Anordnung der Zuführeinrichtungen, nur daß bei der Einrichtung der Fig. 3 je eine Zuführeinrichtung den beiden Seiten des Förderers 31 und den auf beiden Seiten angeordneten Formen 1a, 1b zugeordnet sind. Die oberen Formhälften treten dabei jeweils mit den Kupplungseinrichtungen 20 und die unteren Formhälften jeweils mit den Kupplungsmitteln 20' in Verbindung.

Die Zuführeinrichtungen 17a und 17b sind über die Verbindungsleitungen 21, 22 jeweils mit dem Vor- und dem Rücklauf aus einem Ofen 39a verbunden, der aus einem in üblicher Weise beheizten Behälter 35 mit Thermoöl und einem Thermostaten 36 besteht, der die Heizung so reguliert, daß das im Behälter 35 enthaltene Thermoöl auf einer bestimmten, für den Ausbackvorgang genügend hohen Temperatur gehalten wird. Eine Pumpe 40a sorgt dafür, daß nach dem Ankuppeln der Verbindungsleitungen 22 und 23 an die Hohlräume 9 der Formen 1a und 1b das Heiße Thermoöl durch die Verbindungsleitung 22 in die jeweiligen Hohlräume hereingedrückt wird, wobei gleichzeitig das in den Hohlräumen 9 befindliche Rücklauföl durch das Ventil 13, den Anschluß 18 und die Rücklaufleitung 21 aus den Hohlräumen 9 austritt und im Ausführungsbeispiel über einen Dreiwegehahn 37 je nach der noch vorhandenen Temperatur entweder wieder zurück in den Behälter 35 oder in den Behälter 38 eines Boilers 39b zurückgeführt wird, in dem das Thermoöl auf einer wesentlich niederen Temperatur gehalten werden kann. Die Temperatur in dem Boiler 39b wird so tief gehalten, daß sie ausreicht, um die eingangs herausgestellte schnelle Kühlung der Waffeln 7 in den Formen 1 zu erreichen, so daß auch Waffeln mit hohem Zuckergehalt in der geschilderten einfachen Weise gebacken und weiterverarbeitet werden können. Auch der Boiler 39b ist mit einer Pumpe 40b ausgerüstet, über die die Kühlflüssigkeit wiederum den Zuführeinrichtungen 17c und 17d zugeleitet wird, die wiederum an die Hohlräume 9 der Formen 1 angekuppelt werden, wenn die Formen den entsprechenden Abschnitt der Förderers 31 erreicht haben. Die Arbeitsweise der Zuführeinrichtungen und deren Ausbildung entspricht denen der Zuführeinrichtungen 17a, 17b bzw. der Zuführeinrichtung 17, die anhand der Fig. 1 und 2 erläutert wurde. Dem Boiler 39b kann eine Kühlschlange 41 zugeordnet werden, die dafür sorgt, daß sich das im Behälter 38 befindliche Thermoöl in der gewünschten Weise abkühlt. Über die Kühlschlange 41 kann dem Boiler Wärme entzogen werden, die wiederum für andere betriebliche Zwecke ausgenutzt werden kann.

Die Zuführeinrichtungen 17a, 17b bzw. 17c und 17d können dabei jeweils nur in den Richtungen A bewegbar ausgebildet sein, wenn der Förderer 31 mit den Formen 1 sich schrittweise vorwärtsbewegt und jeweils im Stillstand bleibt, wenn die Hohlräume der Formen mit Heiz- bzw. Kühlflüssigkeit gefüllt werden. Es ist aber sinnvoller, wie bereits anhand der Fig. 1 und 2 erläutert, wenn die Zuführeinrichtungen 17a, 17b und 17c und 17d jeweils auf den Kreuzschlitten 23 gelagert sind und die kontinuierliche Bewegung des Förderers 31 und den Formen 1 jeweils solange mitmachen, wie der Füllvorgang für Heiz- bzw. Kühlflüssigkeit erfordert. Dabei ist für die Bewegung der Zuführeinrichtungen in der Förderrichtung 42 kein gesonderter Antrieb nötig. Vielmehr wird der Kreuzschlitten 23 auf den Führungen 25 durch die form- und kraftschlüssige Verbindung der Kupplungsteile 18 mit den Ventilen 12 und 13 jeweils von der Antriebseinrichtung des Förderers 31 mitgenommen. Die Bewegung quer dazu wird durch den Zylinder 29 gesteuert. Die Anlage der Fig. 3 kann somit mit einer kontinuierlichen Bewegung des Förderers 31 arbeiten.

Wenn die Formen 1 den Bereich der Back- und Kühlstation 43 verlassen haben, werden die oberen Formhälften 2a wiederum aufgeklappt. Die Hohlwaffelhälften, die durch die Kühlung genügend Festigkeit aufweisen, werden in ihren Einlagen 8 gehalten und so aus den Formen 1 entnommen, die im aufgeklappten Zustand mit Hilfe der Umlenkwalze um die Achse 32 nach unten umgelenkt werden. Die Einlagen 8 werden jedoch durch einen weiteren, ebenfalls bekannten Förderer weiter in der ursprünglichen Richtung 42 gezogen und mit ihnen die darin befindlichen Hälften der Hohlwaffeln. An der Station 44 kann nun Creme, Schaum oder auch Eis jeweils in die nach oben offenen Waffelhälften eingefüllt werden, nachdem diese in an sich bekannter Weise mit einer entsprechenden Masse eingesprüht worden sind. Die so gefüllten Hohlwaffelhälften werden mit den Einlagen 8 an der Stelle 45 nach oben geklappt und anschließend durch die Andrückrollen 47 und 46 miteinander verbunden, was durch das Einrasten der ineinanderpassenden Ränder der Waffeln geschieht. Die Andrückwalzen 46, 47 sind zu diesem Zweck in bekannter Weise auf ihrem Umfang profiliert. An der Stelle 48 befinden sich somit in den noch zusammengeklappten Einlagen 8 die fertig gefüllten Hohlwaffeln, die dann entnommen werden können. Die Einlagen 8 klappen dann um ihr Scharnier 33 wieder auseinander und bewegen sich auf dem Untertrum ihres Förderers von der Unterlage 49 weg nach unten, werden dort gereinigt und wieder mit den Formen 1 am Beginn der Einrichtung zusammengeführt.

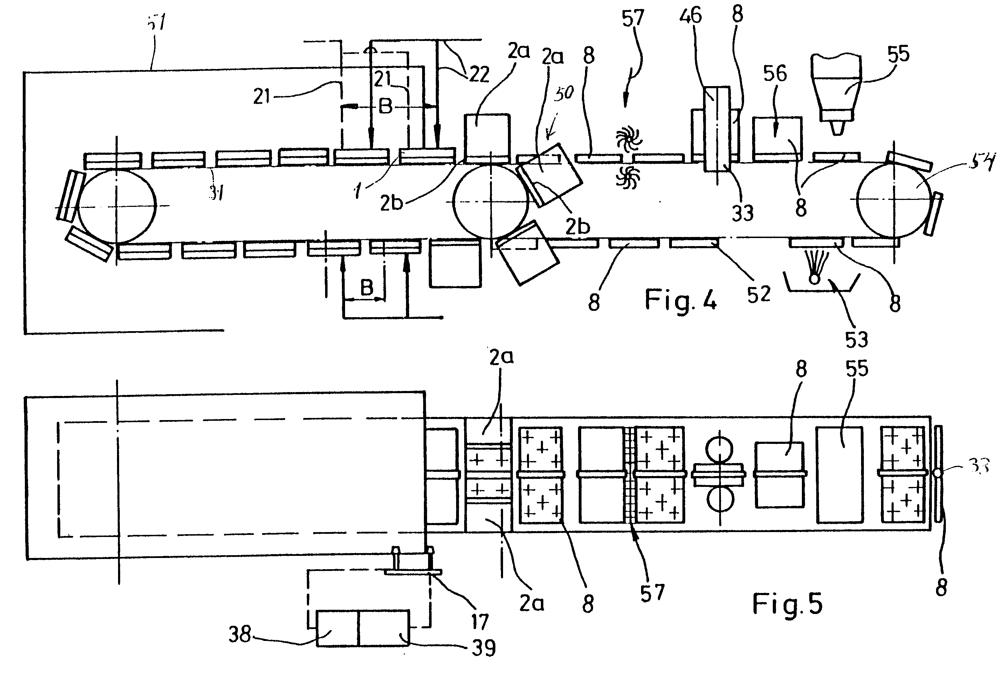

Die Fig. 4 und 5 zeigen, daß auch die für die Herstellung von Hohlwaffeln schon früher vorgeschlagene Einrichtung erfindungsgemäß eingesetzt werden kann, wenn die Drehrichtung ihrer Förderer umgekehrt wird, und wenn die Bearbeitungsstationen entsprechend anders angeordnet werden. Bei diesem Ausführungsbeispiel werden in die aufgeklappten Formen 1 die flüssigen Teigmassen an der Stelle 50 zugegeben. Anschließend laufen die verschlossenen Formen 1 in die Back- und Kühlstation 51 ein. Nach dem Verlassen dieser Station klappen die Formhälften 2a, 2b auf und werden auf ihrem Förderer 31 im Gegenuhrzeigersinn wieder zurückgeführt, während die Einlagen 8, die ebenfalls wieder paarweise um ein Scharnier 33 schwenkbar angeordnet sind, auf dem Untertrum ihres zugeordneten Förderers 52 weiter im Gegenuhrzeigersinn gefördert werden, so daß die nach unten offenen Waffelhälften von unter her über die Sprüheinrichtung 53 versiegelt werden können, ehe sie nach der Umlenkung an der Walze 54 der Füllstation 55 zugeführt werden, wo beispielsweise Eis oder Schaum eingefüllt wird. Die Formhälften 2a, 2b klappen dann an der Stelle 56 wieder hoch und werden von den Andrückwalzen 46 zusammengedrückt, wobei gleichzeitig die beiden Hälften der Hohlwaffeln zusammengefügt werden. Hinter den Walzen 46 lassen sich die fertig gefüllten Hohlwaffeln entnehmen, die Einlagen werden an der Stelle 57 gereinigt und laufen dann wieder der Station 50 zu, wo sie sich mit den Formen 1 vereinigt haben.

**Patentansprüche**

1. Vorrichtung zur Herstellung von Backwaren aus dünnflüssiger Teigmasse, insbesondere von Formwaffeln (7), bei der die Teigmasse zwischen zwei gegeneinander drückbare Formhälften (2a, 2b) eingefüllt, geformt und in einer Backstation ausgebacken wird, wobei insbesondere zwischen den Formhälften (2a, 2b) eine band- oder plattenförmige Einlage (8) mit den ausgestanzten Konturen der Backwaren vorgesehen ist und wobei die Teigmasse jeweils durch ausgestanzte Öffnungen eingefüllt und nach dem Ausbacken mit der Einlage (8) zu nachfolgenden Bearbeitungsstationen weitertransportiert wird, dadurch gekennzeichnet, daß jede Formhälfte (2a, 2b) mit mindestens einem über Ventile (12, 13) von außen zugänglichen Hohlraum (9) versehen ist und daß hinter der Backstation eine Kühlstation vorgesehen ist, die aus einem eine Kühlflüssigkeit enthaltenden Behälter (38) und aus eine Zuführeinrichtung (17) für die Kühlflüssigkeit zu den Hohlräumen in den Formhälften (2a, 2b) besteht, die jeweils mit den Ventilen (12, 13) zusammenwirkt.

2. Vorrichtung nach Anspruch 1, dadurch gekennzeichnet, daß der Kühlstation eine Backstation vorgeschaltet ist, die — wie die Kühlstation — mit einer mit den Ventilen (12, 13) Hohlräume (9) zusammenwirkenden Zuführeinrichtung (17), aber mit einem Behälter (35) ausgerüstet ist, in dem eine auf Backtemperatur gebrachte Heizflüssigkeit enthalten ist.

3. Vorrichtung nach Anspruch 1 oder 2, dadurch gekennzeichnet, daß die Ventile (12, 13) als selbstschließende Ventile ausgebildet sind, die durch Kupplungsmittel (18) der Zuführeinrichtung (17) betätigbar sind.

4. Vorrichtung nach Anspruch 1 oder 2, dadurch gekennzeichnet, daß jedem Hohlraum (9) mindestens je ein zur Zuführung (12) und ein zur Abfuhr (13) der Kühl- oder Heizflüssigkeit dienendes Ventil so zugeordnet sind, daß der Hohlraum (9) möglichst schnell füll- und entleerbar ist.

5. Vorrichtung nach einem der Ansprüche 1 bis 4, dadurch gekennzeichnet, daß die jeweils zu einer Form (1) zusammenklappbar ausgebildeten Formhälften (2a, 2b) einer Transporteinrichtung, insbesondere an einem endlosen Förderband (31) angeordnet sind und von diesem jeweils nacheinander den Zuführeinrichtungen (17a bis 17d) zugeführt werden und daß die Zuführeinrichtungen in der Förderrichtung (42) mindestens über einen Teilabschnitt des Förderweges der Formen (1) synchron zu diesen bewegbar angeordnet und mit einer Vorschubeinrichtung (29) ausgerüstet sind, mit der die Kupplungsmittel (18) quer zur Förderrichtung hin- und herbewegbar sind.

6. Vorrichtung nach Anspruch 5, dadurch gekennzeichnet, daß die Zuführeinrichtungen (17) jeweils auf einem Kreuzschlitten (23) angeordnet sind, der sowohl in der Förderrichtung (42) der Formen (1) als auch senkrecht dazu verfahrbar ist.

7. Vorrichtung nach den Ansprüchen 5 und 6, dadurch gekennzeichnet, daß die Vorschubeinrichtung aus pneumatisch oder hydraulisch wirkenden, steuerbaren Zylindern (29) besteht.

8. Vorrichtung nach einem der Ansprüche 5 bis 7, dadurch gekennzeichnet, daß der Kreuzschlitten (23) form- und kraftschlüssig mit den Formen (1) kuppelbar ist und von der Transporteinrichtung (31) der Formen in der Förderrichtung (42) mitgenommen wird, solange die Ventile (12, 13) zum Flüssigkeitsaustausch betätigt werden.

9. Vorrichtung nach Anspruch 8, dadurch gekennzeichnet, daß dem Kreuzschlitten (23) eine Rückholeinrichtung, insbesondere eine Rückholfeder zugeordnet ist, die ihn nach dem Abkuppeln der Ventile (12, 13) wieder in die Ausgangsstellung zurückholt.

10. Vorrichtung nach Anspruch 1, dadurch gekennzeichnet, daß die Hohlräume (9) der Formhälften (2a, 2b) jeweils in parallel zueinander angeordnete Kammern unterteilt sind, die untereinander durch Öffnungen (15) in Verbindung stehen und von denen die erste mit dem Zuführventil (12) und die letzte mit dem Auslaßventil (13) versehen ist.

11. Vorrichtung nach Anspruch 10, dadurch gekennzeichnet, daß die Öffnungen (15) als eine in der Längsrichtung der Kammern in der Trennwand (16) zu der benachbarten Kammer verlaufende Reihe von Bohrungen ausgebildet sind.

12. Vorrichtung nach den Ansprüchen 10 und 11, dadurch gekennzeichnet, daß die Bohrungen (15) untereinander den gleichen Abstand aufweisen.

## Claims

1. Device for producing pastries, in particular formed waffles (7), from a fluid dough, comprising the steps of filling the dough between two halves of a mould (2a, 2b) that can be pressed together, forming the dough and baking it in a baking station, there being provided, in particular between the halves of the mould (2a, 2b) a band or plate-shaped insert (8) with the contours of the pastries stamped out therefrom, and the dough being filled in through punched openings and being conveyed to subsequent processing stations together with the insert (8) after the baking operation, characterized in that each half of the mould (2a, 2b) is provided with at least one cavity (9) accessible from the outside through valves (12, 13) and that there is provided, downstream of the baking station, a cooling station comprising a tank (38) containing a cooling liquid and supply means (17) for the cooling liquid leading to the cavities in the halves of the mould (2a, 2b) and coacting with the valves (12, 13).

2. Device according to claim 1, characterized in that the cooling station is preceded by a baking station which is equipped — just as the cooling station — with supply means (17) coacting with the valves (12, 13) of the cavities (9), but which in contrast therewith comprises a tank (35) containing heating liquid that has been heated up to baking temperature.

3. Device according to claim 1 or 2, characterized in that the valves (12, 13) are designed as self-closing valves that can be operated by coupling means (18) of the supply means (17).

4. Device according to claim 1 or 2, characterized in that each of the cavities (9) is associated with at least one supply valve (12) and one discharge valve (13) for the cooling and heating liquid in a manner such that the cavity (9) can be filled and drained as rapidly as possible.

5. Device according to any of claims 1 to 4, characterized in that the halves of the mould (2a, 2b) designed to be folded together to form a complete mould (1) are arranged on conveying means, in particular an endless conveyor belt (31) and are fed successively to the supply means (17a to 17d), and that the supply means can be moved in the feeding direction (42) at least over part of the feeding path of the moulds (1), in synchronism with the latter, and are equipped with a feeding mechanism (29) by which the coupling means (18) can be reciprocated in a direction perpendicular to the feeding direction.

6. Device according to claim 5, characterized in that each of the feeding means (17) is arranged on a cross slide (23) that can be displaced in both the feeding direction (42) of the moulds (1) and transversely thereto.

7. Device according to claims 5 and 6, characterized in that the feeding mechanism consists of controllable pneumatic or hydraulic cylinders (29).

8. Device according to any of claims 5 to 7, characterized in that the cross slide (23) can be coupled positively and frictionally with the moulds (1) and is entrained by the conveying means (31) of the moulds in the feeding direction (42) as long as the valves (12, 13) are operated for the purpose of exchanging the fluid.

9. Device according to claim 8, characterized in that the cross slide (23) coacts with return means, in particular a return spring, for returning it to its initial position after uncoupling of the valves (12, 13).

10. Device according to claim 1, characterized in that each of the cavities (9) in the halves of the moulds (2a, 2b) is subdivided into chambers arranged parallel to each other and communicating with each other through openings (15), the first of said chambers being equipped with the supply valve (12) and the last one being equipped with the discharge valve (13).

11. Device according to claim 10, characterized in that the openings (15) take the form of bores provided in the partition wall (16) to the neighbouring chamber and arranged in a line extending in the longitudinal direction of the chambers.

12. Device according to claims 10 and 11, characterized in that the bores (15) are provided at equal spacings.

**Revendications**

1. Appareil pour la fabrication de produits de boulangerie et pâtisserie à partir d'une pâte fluide, notamment des gaufres (7), où la pâte est introduite entre deux moitiés de moule (2a, 2b) applicables l'une contre l'autre, est moulée et est cuite dans un poste de cuisson, auquel cas il est prévu notamment entre les moitiés de moule (2a, 2b) un insert (8) en forme de bande ou de plaque pourvu par poinçonnage des contours du produit de boulangerie ou pâtisserie, et auquel cas la pâte est introduite à chaque fois par des ouvertures formées par poinçonnage et est évacuée après la cuisson, en même temps que l'insert (8), vers des postes de conditionnement suivants, caractérisé en ce que chaque moitié de moule (2a, 2b) est pourvue d'au moins une cavité (9) accessible de l'extérieur par l'intermédiaire de valves (12, 13) et en ce qu'il est prévu en arrière du poste de cuisson un poste de refroidissement, qui se compose d'un récipient (38) contenant un liquide de refroidissement et d'un dispositif d'introduction (17) du liquide de refroidissement dans les cavités des moitiés de moule (2a, 2b), en coopérant respectivement avec les valves (12, 13).

2. Appareil selon la revendication 1, caractérisé en ce qu'il est prévu avant le poste de refroidissement un poste de cuisson qui est équipé — comme le poste de refroidissement — d'un dispositif d'introduction (17) coopérant avec les valves (12, 13) des cavités (9), mais également d'un récipient (35) dans lequel est contenu un liquide de chauffage porté à la température de cuisson.

3. Appareil selon la revendication 1 ou 2, caractérisé en ce que les valves (12, 13) sont agencées comme des valves à fermeture automatique, qui peuvent être actionnées par des moyens d'accouplement (18) du dispositif d'introduction (17).

4. Appareil selon la revendication 1 ou 2, caractérisé en ce que chaque cavité (9) est associée au moins à respectivement une valve servant à l'introduction (12) et une valve servant à la décharge (13) du liquide de refroidissement ou de chauffage de telle sorte que la cavité (9) puisse être remplie et vidée aussi rapidement que possible.

5. Appareil selon une des revendications 1 à 4, caractérisé en ce que les moitiés de moule (2a, 2b) agencées de façon à être rabattues l'une contre l'autre pour former un moule (1) sont disposées sur un dispositif de transport, notamment sur une bande transporteuse sans fin (31) et sont amenées respectivement par ce dispositif successivement dans les dispositifs d'introduction (17a à 17d) et en ce que les dispositifs d'introduction sont disposés, dans la direction de transport (42), de façon à être déplacés, au moins sur une partie de la voie de transport, en synchronisme par rapport aux moules (1) et sont équipés d'un dispositif d'avancement (29) à l'aide duquel les moyens d'accouplement (18) peuvent être déplacés alternativement perpendiculairement à la direction de transport.

6. Appareil selon la revendication 5, caractérisé en ce que les dispositifs d'introduction (17) sont respectivement placés sur un chariot à mouvements en croix (23), qui est déplaçable aussi bien dans la direction de transport (42) des moules (1) que dans une direction perpendiculaire à celle-ci.

7. Appareil selon les revendications 5 et 6, caractérisé en ce que le dispositif d'avancement se compose de cylindres (29) pouvant être commandés et fonctionnant pneumatiquement ou hydrauliquement.

8. Appareil selon une des revendications 5 à 7, caractérisé en ce que le chariot à mouvements en croix (23) peut être accouplé par conjugaison de formes et de forces avec les moules (1) et est entraîné par le dispositif transporteur (31) des moules dans la direction de transport (42) aussi longtemps que les valves (12, 13) sont actionnées pour une circulation de liquide.

9. Appareil selon la revendication 8, caractérisé en ce que le chariot à mouvements en croix (23) est associé à un dispositif de rappel, notamment un ressort de rappel, qui assure son rappel jusque dans la position initiale après la fermeture des valves (12, 13).

10. Appareil selon la revendication 1, caractérisé en ce que les cavités (9) des moitiés de moule (2a, 2b) sont divisées chacune en chambres disposées parallèlement entre elles, qui sont reliées entre elles par des orifices (15) et dont la première est pourvue de la valve d'introduction (12) tandis que la dernière est pourvue de la valve de décharge (13).

11. Appareil selon la revendication 10, caractérisé en ce que les orifices (15) sont agencés sous la forme d'une rangée de trous qui sont ménagés, dans la direction longitudinale des chambres, dans la paroi (16) de séparation avec la chambre adjacente.

12. Appareil selon les revendications 10 et 11, caractérisé en ce que les trous (15) sont espacés l'un de l'autre de la même distance.

Fig.1

Fig. 2

0 096 256

Fig. 3

Fig. 4

Fig. 5

0 096 256